# EUROPÄISCHE PATENTSCHRIFT

(11) **EP 1 491 399 B1**
(45) Veröffentlichungstag und Bekanntmachung des Hinweises auf die Patenterteilung: **29.10.2008**
(21) Anmeldenummer: 04014809.0
(22) Anmeldetag: 24.06.2004
(51) Int. Cl.: B60Q 1/00, B60Q 1/28

(54) **Beleuchtungseinrichtung für ein Fahrzeug**
Lighting device for vehicle
Dispositif d'éclairage pour véhicule

(30) Priorität: 24.06.2003 DE 10328214
(43) Veröffentlichungstag der Anmeldung: 29.12.2004
(73) Patentinhaber: Hella KGaA Hueck & Co., 59552 Lippstadt (DE)
(72) Erfinder: Jimenez, José, Manuel, Priego, 33104 Paderborn (DE); Stuhldreher, Markus, 59939 Olsberg (DE)

(56) Entgegenhaltungen:
- EP-A- 1 089 324
- DE-A1- 10 009 590
- FR-A- 1 315 224

## Beschreibung

Die Erfindung betrifft eine Beleuchtungseinrichtung für ein Fahrzeug, die zumindest einen Tagfahrscheinwerfer sowie einen Abblendlicht- und/oder Fernlichtscheinwerfer aufweist, welche mit einer Ansteuereinrichtung verbunden sind.

Eine derartige Beleuchtungseinrichtung ist aus DE 201 15 775 U1 bekannt. Sie weist zwei Scheinwerfereinheiten mit jeweils einem Abblendlicht- und einem Fernlichtscheinwerfer und zusätzlich zwei separate Tagfahr-Scheinwerfer auf. Die Tagfahr-Scheinwerfer haben jeweils mehrere weiße Leuchtdioden als Lichtquellen, die mit einer Ansteuereinrichtung verbunden sind, welche die Leuchtkraft des Tagfahr-Scheinwerfers in Abhängigkeit von der Umgebungslicht-Intensität regelt. Dabei weisen die von dem Tagfahr-Scheinwerfer abgegebenen Lichtbündel bei heller Umgebung eine größere Lichtintensität auf als bei dunkler Umgebung. Durch das Tagfahrlicht wird die Wahrnehmbarkeit des Fahrzeugs bei Tageslicht verbessert, ohne dass andere Verkehrsteilnehmer durch Blendung gestört werden. Im Vergleich zum Abblend- oder Fernlicht ist die Stromaufnahme des Tagfahrscheinwerfers geringer, so dass durch die Verwendung der Tagfahr-Scheinwerfer gegenüber einem Fahrzeug, dass auch bei Tageslicht mit Abblendlicht fährt, elektrische Energie und somit auch Kraftstoff eingespart werden kann. Ein Nachteil der Beleuchtungseinrichtung besteht jedoch darin, dass sie noch relativ aufwendig ist, weil für die Tagfahrlichtfunktion zusätzliche Schweinwerfer benötigt werden.

Aus DE 199 46 297 A1 ist femer eine Beleuchtungseinrichtung für ein Fahrzeug bekannt, die einen Scheinwerfer mit einem Reflektor und einer diesem zugeordneten Zweifaden-Glühlampe aufweist. Ein Hauptglühfaden der Glühlampe ist für eine Fernlichtfunktion und ein Nebenglühfaden für eine Tagfahrlichtfunktion vorgesehen. Ungünstig ist dabei jedoch, dass für die Fernlichtfunktion und die Tagfahrlichtfunktion derselbe Reflektor verwendet wird, obwohl für die Tagfahrlichtfunktion eine wesentlich breitere Abstrahlcharakteristik (Signallichtcharakteristik) des Schweinwerfers benötigt wird als für die Fernlichtfunktion (gebündeltes Licht).

Eine gattungsgemäße Beleuchtungseinrichtung ist aus DE-A-100 09 590 bekannt.

Es besteht deshalb die Aufgabe, eine Beleuchtungseinrichtung der eingangs genannten Art zu schaffen, die trotz eines einfachen und kostengünstigen Aufbaus sowohl beim Abblendlicht bzw. Femlicht also auch beim Tagfahrlicht eine gute Lichtabstrahlcharakteristik ermöglicht.

Diese Aufgabe wird dadurch gelöst, dass die Ansteuereinrichtung und der Tagfahrscheinwerfer derart ausgebildet sind, dass bei eingeschaltem Abblend- und/oder Fernlicht das Beleuchtungsniveau des Tagfahrscheinwerfers derart reduziert ist, dass dieser als Positionsleuchte nutzbar ist.

In vorteilhafter Weise sind also die vom Gesetzgeber vorgeschriebenen Positionsleuchten in die Tagfahrscheinwerfer integriert, so dass zusätzliche Positionsleuchten eingespart werden können. Somit ergibt sich eine einfach aufgebaute kompakte Beleuchtungseinrichtung. Da für Abblend- und/oder Fernlicht einerseits und das Tagfahrlicht andererseits separate Scheinwerfer bzw. Scheinwerfermodule mit eigenen Reflektoren vorgesehen sein können, können die Reflektoren dieser Scheinwerfer bzw. Scheinwerfermodule unterschiedlich ausgestaltet und an die ihnen jeweils zugeordnete Lichtfunktion angepasst sein. Die für ein Positionslicht geforderte Lichtabstrahlcharakteristik ist der Lichtabstrahlcharakteristik, die für ein Tagfahrlicht gefordert wird, sehr ähnlich, da sowohl für das Positionslicht als auch für das Tagfahrlicht eine breite Lichtabstrahlung gewünscht wird (Signallichtcharakter). Somit kann der Tagfahrscheinwerfer durch Reduzierung seines Beleuchtungsniveaus auf einfache Weise als Positionsleuchte genutzt werden kann. Dabei kann der Reflektor gegebenenfalls entsprechend ausgelegt und an die Erfüllung beider Lichtfunktionen angepasst sein. Beim Einschalten des Abblend- und/oder Fernlichts wird das Beleuchtungsniveau des Tagfahrscheinwerfers automatisch abgesenkt und beim Abschalten des Abblend- und/oder Fernlichts automatisch angehoben. Somit wird ein Tag- und Nachtdesign erzielt.

Vorteilhaft ist, wenn der Tagfahrscheinwerfer als Leuchtmittel eine Zweifadenglühlampe mit einem Hauptfaden und einem Nebenfaden aufweist, und wenn die Ansteuereinrichtung derart ausgebildet ist, dass bei eingeschaltetem Abblend- und/oder Fernlicht der Nebenfaden und bei ausgeschaltetem Abblend- und/oder Fernlicht der Hauptfaden brennt. Somit wird für die Tagfahrlichtfunktion und die Positionslichtfunktion nur eine einzige Glühlampe benötigt, die bei beiden Lichtfunktionen jeweils einen günstigen Wirkungsgrad und somit einen geringen Energieverbrauch ermöglicht.

Bei einer anderen vorteilhaften Ausführungsform weist der Tagfahrscheinwerfer mehrere, vorzugsweise in unterschiedlichen Leuchtenkammern angeordnete Leuchtmittel auf, wobei die Ansteuereinrichtung derart ausgebildet ist, dass bei ausgeschaltetem Abblendund/oder Fernlicht eine größere Anzahl Leuchtmittel eingeschaltet ist als bei eingeschaltetem Abblend- und/oder Fernlicht. Bei eingeschaltem Abblend- und/oder Fernlicht ist also das Beleuchtungsniveau des Tagfahrscheinwerfers dadurch reduziert, dass ein Teil der Leuchtmittel des Tagfahrscheinwerfers abgeschaltet sind. So können beispielsweise bei ausgeschaltem Abblend- und/oder Fernlicht fünf Leuchtmittel für die Realisierung der Tagfahrlichtfunktion vorgesehen sein, von denen nach Einschaltung des Abblendlichts eines brennen bleibt, um die Positionslichtfunktion zu erfüllen. Als Leuchtmittel sind bevorzugt Leuchtdioden vorgesehen, die eine hohe Lebensdauer ermöglichen.

Bei einer anderen zweckmäßigen Ausgestaltung der Erfindung weist die Ansteuereinrichtung zum Reduzieren des Beleuchtungsniveaus des Tagfahrscheinwerfers bei eingeschaltetem Abblend- und/oder Fernlicht einen Dimmer auf. Somit kann das (können die) für das Tagfahrlicht vorgesehene(n) Leuchtmittel auch für das Positionslicht genutzt werden. Bei einem Tagfahrscheinwerfer mit mehreren Leuchtmitteln ergibt sich dadurch ein gleichmäßiger Verschleiß der Leuchtmittel.

Vorteilhaft ist, wenn die Betriebsspannung wenigstens eines Leuchtmittels und/oder Glühfadens des Tagfahrscheinwerfers bei ausgeschaltetem Abblend- und/oder Fernlicht geringer ist als die Nennbetriebsspannung des Leuchtmittels und/oder Glühfadens. Dadurch wird einerseits die Lebensdauer des Leuchtmittels bzw. Glühfadens erhöht und andererseits wird aber auch die Einhaltung der Maximalwerte der Leuchtdichte des von dem (den) Leuchtmittel(n) abgestrahlten Lichts mit im Handel verfügbaren Leuchtmitteln auf einfache Weise ermöglicht.

Bei einer zweckmäßigen Ausgestaltung der Erfindung weist der Tagfahrscheinwerfer einen Freiformreflektor auf, der hinter einer durchsichtigen Abdeckscheibe angeordnet ist, die sich vorzugsweise durchgängig bis über den Abblendlicht- und/oder Fernlichtscheinwerfer und gegebenenfalls eine Blinkerleuchte erstreckt. Somit ergibt sich eine kompakte Schweinwerferbaugruppe, in die ggf. auch der Blinker integriert sein kann.

Vorteilhaft ist, wenn der Tagfahrscheinwerfer eine Blende aufweist, die zwischen der Abdeckscheibe und dem Leuchtmittel angeordnet ist und vorzugsweise hutförmig ausgebildet ist. Dabei ist es sogar möglich, das die Blende in Hauptabstrahllichtung des von dem Tagfahrscheinwerfer ausgesandten Lichtbündels relativ zu dem Leuchtmittel beweglich ist, um die Menge des durch die Öffnung der Blende hindurchtretenden Lichts einzustellen. Die Blende besteht vorzugsweise aus Stahlblech.

Nachfolgend ist ein Ausführungsbeispiel der Erfindung anhand der Zeichnung näher erläutert. Es zeigen:
- Fig. 1: eine dreidimensionale Vorderansicht einer Scheinwerfereinheit für die linke Seite eines Fahrzeugs, die in einem Leuchtengehäuse einen Tagfahrscheinwerfer, einen Abblendlicht- und Fernlichtscheinwerfer und eine Blinkerleuchte aufweist,
- Fig. 2: einen Horizontalschnitt durch die in Fig. 1 gezeigte Scheinwerfereinheit, wobei die Zeichenebene im Bereich des Tagfahrscheinwerfers, des Abblendlicht- und Fernlichtscheinwerfer und der Blinkerleuchte in zueinander versetzten Ebenen verläuft, und

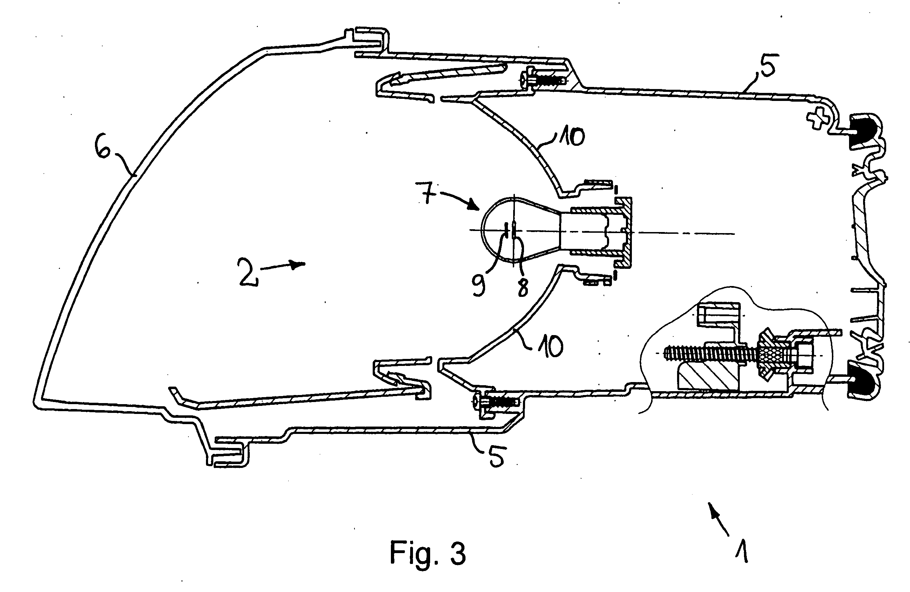

- Fig. 3: einen vertikalen Längsschnitt durch den Tagfahrscheinwerfer.

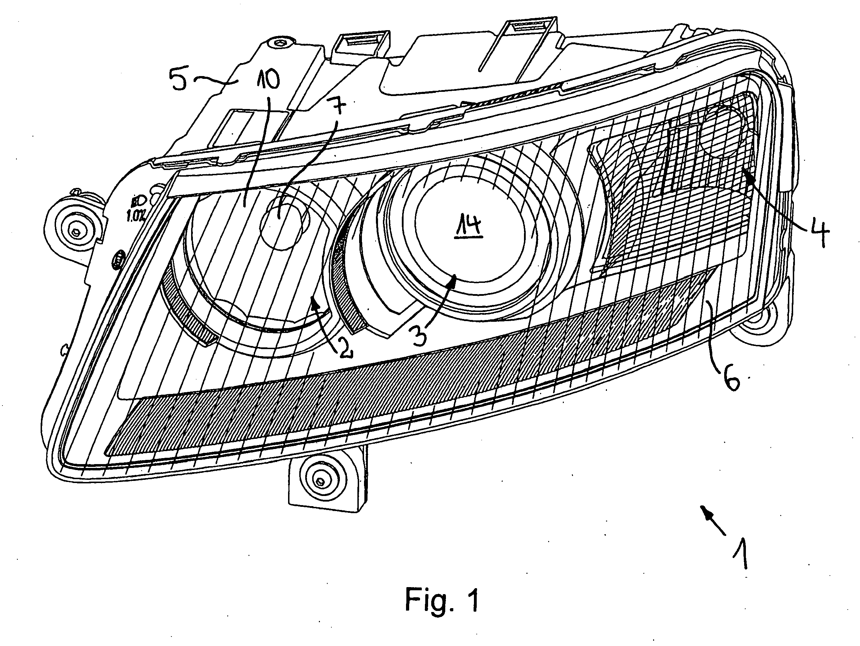

Eine Beleuchtungseinrichtung für ein Fahrzeug weist für die linke (Fig. 1) und rechte Fahrzeugvorderseite jeweils eine Scheinwerfereinheit 1 auf, die einen Tagfahrscheinwerfer 2, einen Abblendlicht- und Fernlichtscheinwerfer 3 und eine Blinkerleuchte 4 hat, die in einem Leuchtengehäuse 5 hinter einer sich durchgängig über die Scheinwerfer 2, 3 und die Blinkerleuchte 4 erstreckenden glasklaren Abdeckscheibe 6 angeordnet sind.

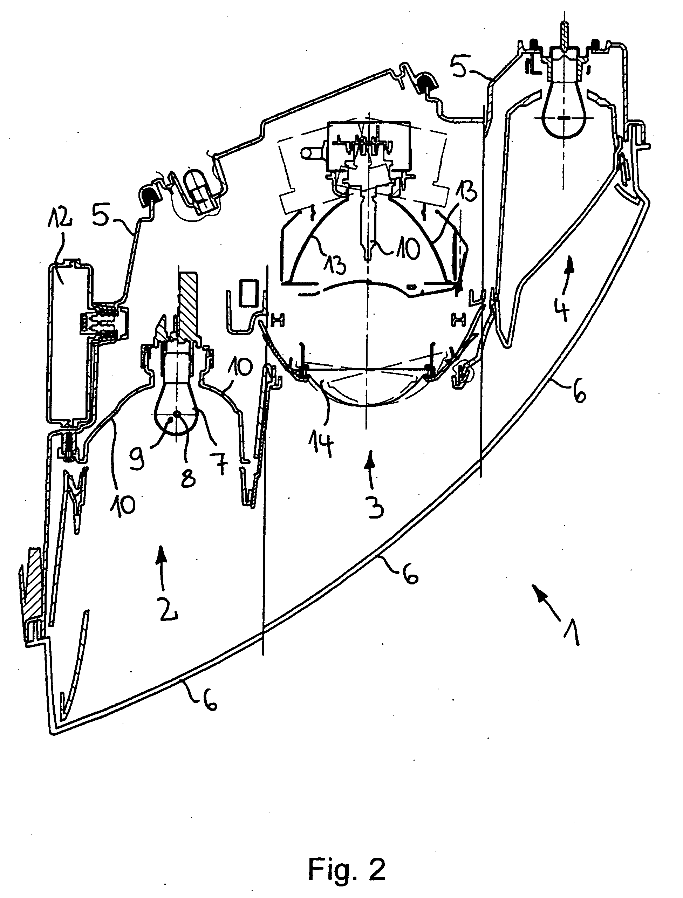

Wie in Fig. 2 erkennbar ist, weist der Tagfahrscheinwerfer 2 als Leuchtmittel eine Zweifadenglühlampe 7 auf, die einen Hauptfaden 8 mit einer Nennleistung von 21 Watt und einen Nebenfaden 9 mit einer Nennleistung von 5 Watt hat. Die Zweifadenglühlampe 7 ist an einem Freiformreflektor 10 angeordnet, welcher das von der Zweifadenglühlampe 7 abgestrahlte Licht bündelt. Der Hauptfaden 8 ist im Brennpunkt des Reflektors 10 und der Nebenfaden 9 etwas von dem Brennpunkt beabstandet.

Der Abblendlicht- und Fernlichtscheinwerfer 3 weist als Leuchtmittel eine Gasentladungslampe 11 auf, die über ein Vorschaltgerät 12, welches die Bordspannung des Kraftfahrzeugs in eine höhere, zum Betrieb der Gasentladungslampe 11 geeignete elektrische Spannung transformiert, mit der Stromversorgung des Fahrzeugs verbindbar ist. Die Gasentladungslampe 11 ist an einem Reflektorteil 13 angeordnet, welches das von der Gasentladungslampe 11 abgestrahlte Licht in ein Lichtbündel umformt, in dessen Strahlengang zwischen der Abdeckscheibe 6 und der Gasentladungslampe 11 eine Projektionslinse 14 angeordnet ist. In Fig. 2 ist noch erkennbar, dass der Abblendlichtund Fernlichtscheinwerfer 3 um eine in Einbaulage der Scheinwerfereinheit 1 etwa vertikal angeordnete Achse verschwenkbar in dem Leuchtengehäuse 5 angeordnet sind. Dadurch ist es möglich, die Abstrahlrichtung des Abblendlicht- und Fernlichtscheinwerfers 3 beim Durchfahren einer Kurve dem Straßenverlauf anzupassen.

Der Tagfahrscheinwerfer 2 sowie der Abblendlicht- und Fernlichtscheinwerfer 3 sind mit einer in der Zeichnung nicht näher dargestellten Ansteuereinrichtung verbunden, die am Armaturenbrett des Fahrzeugs einen Fahrlichtschalter zum Ein- und Ausschalten des Abblendlichts und Fernlichts 3 aufweist. In den Fahrlichtschalter sind mehrere elektrische Schalter integriert, die derart ausgebildet und mit der Zweifadenglühlampe 7 sowie der Gasentladungslampe 11 verschaltet sind, dass bei eingeschaltetem Antriebsmotor des Fahrzeugs, ausgeschaltetem Abblendlicht und ausgeschaltetem Fernlicht das Tagfahrlicht eingeschaltet ist. Dabei brennt der Hauptfaden 8 und der Nebenfaden 9 ist ausgeschaltet. Das Tagfahrlicht weist gegenüber dem Abblend- und/oder Fernlicht ein geringeres Beleuchtungsniveau und eine breitere Abstrahlcharakteristik auf.

Beim Einschalten des Abblendlichts und/oder des Fernlichts durch Betätigen des Fahrlichtschalters wird das Beleuchtungsniveau des Tagfahrscheinwerfers 2 mittels der elektrischen Schalter automatisch auf ein niedrigeres Beleuchtungsniveau reduziert, indem der Hauptfaden 8 abgeschaltet und der Nebenfaden 9 eingeschaltet wird. Der Tagfahrscheinwerfer 2 dient dann als Positionsleuchte. Beim Ausschalten des Abblendlichts wird das Beleuchtungsniveau des Tagfahrscheinwerfers 2 automatisch erhöht, indem der Nebenfaden 9 abgeschaltet und der Hauptfaden 8 wieder eingeschaltet wird, so dass der Tagfahrscheinwerfer 2 dann wieder die Tagfahrlichtfunktion aufweist.

Um mit der im Handel verfügbaren P 21/5W Zweifadenglühlampe 7 die für das Tagfahrlicht vorgeschriebenen Leuchtdichtewerte besser einhalten zu können und außerdem auch ein hohe Lebensdauer der Zweifadenglühlampe 7 zu ermöglichen, ist die Betriebsspannung des Hauptfadens 8 gegenüber der Nennspannung der Zweifadenglühlampe 7 reduziert. Dies kann durch Vorschalten eines elektrischen Vorwiderstands oder eines Dimmers erreicht werden.

Erwähnt werden soll noch, dass die Zweifadenglühlampe und/oder die Gasentladungslampe auch über eine elektronische Ansteuereinrichtung angesteuert werden können.

Dabei kann anstelle des Fahrlichtschalters oder zusätzlich zu diesem ein Umgebungslichtsensor vorgesehen sein, der beim Unterschreiten einer vorgegebenen Umgebungshelligkeit über Relais und/oder Halbleiterschaltelemente das Abblendlicht und den Nebenfaden 9 einschaltetet und den Hauptfaden 8 abschaltet. In entsprechender Weise werden das Abblendlicht und der Nebenfaden 9 ein- und der Hauptfaden 8 abgeschaltet, wenn die Umgebungshelligkeit einen vorgegebenen Grenzwert überschreitet.

## Patentansprüche

1. Beleuchtungseinrichtung für ein Fahrzeug, die zumindest einen Tagfahrscheinwerfer (2) sowie einen Abblendlicht- und/oder Fernlichtscheinwerfer (2) aufweist, welche mit einer Ansteuereinrichtung verbunden sind, **dadurch gekennzeichnet, dass** die Ansteuereinrichtung und der Tagfahrscheinwerfer (2) derart ausgebildet sind, dass bei eingeschaltem Abblend- und/oder Fernlicht das Beleuchtungsniveau des Tagfahrscheinwerfers (2) derart reduziert ist, dass dieser als Positionsleuchte nutzbar ist.

2. Beleuchtungseinrichtung nach Anspruch 1, **dadurch gekennzeichnet, dass** der Tagfahrscheinwerfer (2) als Leuchtmittel eine Zweifadenglühlampe (7) mit einem Hauptfaden (8) und einem Nebenfaden (9) aufweist, und dass die Ansteuereinrichtung derart ausgebildet ist, dass bei eingeschaltetem Abblend- und/oder Fernlicht der Nebenfaden (8) und bei ausgeschaltetem Abblend- und/oder Fernlicht der Hauptfaden (9) brennt.

3. Beleuchtungseinrichtung nach Anspruch 1 oder 2, **dadurch gekennzeichnet, dass** der Tagfahrscheinwerfer (2) mehrere, vorzugsweise in unterschiedlichen Leuchtenkammem angeordnete Leuchtmittel aufweist, und dass die Ansteuereinrichtung derart ausgebildet ist, dass bei ausgeschaltetem Abblend- und/oder Fernlicht eine größere Anzahl Leuchtmittel eingeschaltet ist als bei eingeschaltetem Abblend- und/oder Fernlicht.

4. Beleuchtungseinrichtung nach einem der Ansprüche 1 bis 3, **dadurch gekennzeichnet, dass** die Ansteuereinrichtung zum Reduzieren des Beleuchtungsniveaus des Tagfahrscheinwerfers (2) bei eingeschaltetem Abblend- und/oder Fernlicht einen Dimmer aufweist.

5. Beleuchtungseinrichtung nach einem der Ansprüche 1 bis 4, **dadurch gekennzeichnet, dass** die Betriebsspannung wenigstens eines Leuchtmittels und/oder Glühfadens des Tagfahrscheinwerfers (2) bei ausgeschaltetem Abblend- und/oder Fernlicht geringer ist als die Nennbetriebsspannung des Leuchtmittels und/oder Glühfadens.

6. Beleuchtungseinrichtung nach einem der Ansprüche 1 bis 5, **dadurch gekennzeichnet, dass** der Tagfahrscheinwerfer (2) einen Freiformreflektor (10) aufweist, der hinter einer durchsichtigen Abdeckscheibe (6) angeordnet ist, die sich vorzugsweise durchgängig bis über den Abblendlicht- und/oder Fernlichtscheinwerfer (3) und gegebenenfalls eine Blinkerleuchte (4) erstreckt.

7. Beleuchtungseinrichtung nach einem der Ansprüche 1 bis 6, **dadurch gekennzeichnet, dass** der Tagfahrscheinwerfer (2) eine Zwischenlichtscheibe aufweist, die hinter der Abdeckscheibe (6) angeordnet ist und gegebenenfalls mit mindestens einer Optik versehen ist.

8. Beleuchtungseinrichtung nach einem der Ansprüche 1 bis 7, **dadurch gekennzeichnet, dass** der Tagfahrscheinwerfer (2) eine Blende aufweist, die zwischen der Abdeckscheibe (6) und dem Leuchtmittel angeordnet ist und vorzugsweise hutförmig ausgebildet ist.

## Claims

1. Lighting apparatus for a vehicle comprising at least one daytime running lamp (2) and a low beam and/or high beam lamp (2) which are connected to a control unit, **characterized in that** the control unit and the daytime running lamp (2) are designed such that the light output of the daytime running lamp (2) is reduced such that it acts as a park light when the low beams and/or high beams are on.

2. Lighting apparatus of claim 1, **characterized in that** the light source of the daytime running lamp (2) is a two-filament bulb (7) with a primary filament (8) and a secondary filament (9) and **in that** the control unit is designed such that the auxiliary filament (8) is enabled when the low beam lamps and/or the high beam lamps are on and the primary filament (9) is enabled when the low beam lamps and/or the high beam lamps are off.

3. Lighting apparatus of claim 1 or 2, **characterized in that** the daytime running lamp (2) has multiple light sources which are preferably located in different lighting chambers and **in that** the control unit is designed such that a larger number of light sources is on when the low beam lamps and/or the high beam lamps are off than when the low beam lamps and/or high beam lamps are on.

4. Lighting apparatus of claims 1 to 3, **characterized in that** the control unit features a dimmer used to reduce the light output of the daytime running lamp (2) when the low beam lamps and/or high beam lamps are on.

5. Lighting apparatus of claims 1 to 4, **characterized in that** the operating voltage of at least one light source and/or filament of the daytime running lamp (2) is lower than the rated operating voltage of the light source and/or filament when the low beam lamps and/or high beam lamps are off.

6. Lighting apparatus of claims 1 to 5, **characterized in that** the daytime running lamp (2) has a free-form reflector (10) that resides behind a transparent cover lens (6) which preferably covers the entire low beam lamp and/or high beam lamp (3) and an indicator lamp (4) that may be installed.

7. Lighting apparatus of claims 1 to 6, **characterized in that** the daytime running lamp (2) has an intermediate lens that resides behind the cover lens (6) and may have at least one optical pattern.

8. Lighting apparatus of claims 1 to 7, **characterized in that** the daytime running lamp (2) has a preferably hat-shaped screen residing between the cover lens (6) and the light source.

## Revendications

1. Dispositif d'éclairage pour un véhicule comportant au moins un feu diurne (2) ainsi qu'un feu à optique code et/ou à optique route (2) qui sont reliés par un dispositif de commande, **caractérisé en ce que** le dispositif de commande et le feu diurne (2) sont configurés de manière que, lorsque l'optique code et/ou route est allumée, le niveau d'éclairage du feu diurne (2) est réduit à un point tel que ce dernier peut être utilisé comme feu de position.

2. Dispositif d'éclairage selon la revendication 1, **caractérisé en ce que** le feu diurne (2) comporte à titre de lampe une ampoule à 2 filaments (7) avec un filament principal (8) et un filament secondaire (9) et que le dispositif de commande est configuré de manière que, lorsque l'optique code et/ou route est allumée, le filament secondaire (9) brûle et, lorsque l'optique code et/ou route est éteinte, le filament principal (8) brûle.

3. Dispositif d'éclairage selon la revendication 1 ou 2, **caractérisé en ce que** le feu diurne (2) comporte plusieurs lampes disposées de préférence dans différentes chambres et que le dispositif de commande est formé de manière que, lorsque l'optique code et/ou route est éteinte, le nombre de lampes allumées est plus élevé que lorsque l'optique code et/ou route est allumée.

4. Dispositif d'éclairage selon l'une des revendications 1 à 3, **caractérisé en ce que** le dispositif de commande comporte un variateur pour réduire le niveau d'éclairage du feu diurne (2) lorsque l'optique code et/ou route est allumée.

5. Dispositif d'éclairage selon l'une des revendications 1 à 4, **caractérisé en ce que,** lorsque l'optique code et/ou route est éteinte, la tension de fonctionnement d'au moins une lampe et/ou d'un filament du feu diurne (2) est plus faible que la tension de fonctionnement nominale de la lampe et/ou d'un filament.

6. Dispositif d'éclairage selon l'une des revendications 1 à 5, **caractérisé en ce que** le feu diurne (2) présente un réflecteur à forme libre (10) disposé derrière une glace externe transparente (6) qui s'étend de préférence jusqu'au-dessus du feu à optique code et/ou à optique route (3) et, le cas échéant, un feu clignotant (4).

7. Dispositif d'éclairage selon l'une des revendications 1 à 6, **caractérisé en ce que** le feu diurne (2) présente un disperseur intermédiaire qui est disposé derrière la glace externe (6) et qui est équipé, le cas échéant, d'au moins une optique.

8. Dispositif d'éclairage selon l'une des revendications 1 à 7, **caractérisé en ce que** le feu diurne (2) présente un prolongateur qui est disposé entre la glace de recouvrement (6) et la lampe et qui a de préférence la forme d'un chapeau.
